# EUROPEAN PATENT APPLICATION

(11) **EP 4 668 246 A1**
(43) Date of publication of application: **24.12.2025**
(21) Application number: 23930195.5
(22) Date of filing: 24.03.2023
(51) Int. Cl.: G08G 1/16, B60W 30/08, G06V 10/62, G06V 20/58

(54) **MOBILE BODY CONTROL DEVICE, MOBILE BODY CONTROL METHOD, AND PROGRAM**

(71) Applicant: HONDA MOTOR CO., LTD., Tokyo 105-8404 (JP)
(72) Inventor: NISHIZAWA Yuta, Wako-shi, Saitama 351-0193 (JP); KATO Atsushi, Wako-shi, Saitama 351-0193 (JP)
(74) Representative: Kiwit, Benedikt
(86) International application number: PCT/JP2023/011714
(87) International publication number: WO 2024/201553

(57) **Abstract**

A control device for a mobile body, which moves while recognizing a vicinity of the mobile body, includes an object recognition unit configured to recognize an object in the vicinity of the mobile body on the basis of an observation value of a sensor provided in the mobile body, and an object tracking unit configured to track the object recognized by the object recognition unit, on the basis of time-series data of the observation value, in which the object tracking unit is configured to determine whether the object is a tracking target, on the basis of a signal intensity of the observation value and a dispersion of the observation value.

## Description

### TECHNICAL FIELD

The present invention relates to a mobile body control device, a mobile body control method, and a program.

### BACKGROUND ART

In recent years, efforts intended to realize a low carbon society or a decarbonized society have been actively made, and research and development regarding an electrified mobile body capable of traveling on both of a sidewalk and a roadway to reduce CO2 emissions or improve energy efficiency in a vehicle has been conducted. For example, Patent Document 1 discloses a technique that takes into account multi-path in an occupancy grid map to estimate surroundings of a mobile body from observation data obtained using sensing equipment with high accuracy. For example, Patent Document 2 discloses that a threshold in determining whether a target object detected by a camera and an ultrasonic sonar is a target object to be controlled, on the basis of the detection reliability of a sensor is set to be different between when the target object is a fusion target object and when the target object is a non-fusion target object.

### Citation List

### Patent Document

Patent Document 1: Japanese Unexamined Patent Application, First Publication No. 2017-166966
Patent Document 2: Japanese Unexamined Patent Application, First Publication No. 2020-190845

### SUMMARY OF INVENTION

### Technical Problem

While object tracking using a Kalman filter may be performed in the above-described sensor fusion, when the object tracking using the Kalman filter is simply applied to the related art, a situation in which noise is misrecognized as a tracking target may be continued and noise may be continuously tracked.

The present invention has been accomplished in consideration of such a situation, and an object of the present invention is to provide a mobile body control device, a mobile body control method, and a program capable of preventing continuation of a situation in which noise is misrecognized as a tracking target, in tracking an object in the vicinity of a mobile body. The present invention, in turn, contributes to improvement of energy efficiency.

### Solution to Problem

A mobile body control device, a mobile body control method, and a program according to the invention employ the following configurations.
(1) A mobile body control device according to an aspect of the invention is a mobile body control device, the mobile body moving while recognizing a vicinity of the mobile body, the control device including an object recognition unit configured to recognize an object in the vicinity of the mobile body on the basis of an observation value of a sensor provided in the mobile body, and an object tracking unit configured to track the object recognized by the object recognition unit, on the basis of time-series data of the observation value, in which the object tracking unit is configured to determine whether the object is a tracking target, on the basis of a signal intensity of the observation value and a dispersion of the observation value.
(2) In the aspect of (1) described above, the object tracking unit is configured to determine that the object is a the tracking target, when a reliability of the observation value based on the signal intensity is equal to or smaller than a predetermined reference, and when the dispersion of the observation value is greater than a threshold.
(3) In the aspect of (1) or (2) described above, the object tracking unit is configured to start monitoring of the dispersion of the observation value when a state in which the reliability is higher than the reference changes to a state in which the reliability is equal to or lower than the reference, and determine that the object is no longer the tracking target, when the dispersion of the observation value is greater than the threshold.
(4) In the aspect of any one of (1) to (3) described above, the object tracking unit is configured to determine that the object is not a tracking target, when the reliability is recognized on the basis of an error between the signal intensity of the observation value and an estimation result of the signal intensity of the observation value, when the error is greater than a first threshold, and when the dispersion is greater than a second threshold.
(5) In the aspect of any one of (1) to (4) described above, the object tracking unit is configured to learn the signal intensity of the observation value with an auto-encoder configured to compress and decompress the signal intensity of the observation value and compare a decompression error between a signal intensity before compression by the auto-encoder and a signal intensity after decompression with the first threshold.
(6) In the aspects of (1) to (5) described above, the object tracking unit is configured to perform tracking for the object by applying the observation value to a Kalman filter and execute initialization on the Kalman filter when determination is made that the object is not the tracking target.
(7) In the aspects of (1) to (6) described above, the object tracking unit is configured to execute gating processing when the dispersion of the observation value is greater than a third threshold and execute update processing of the Kalman filter when there is an observation value having passed the gating processing.
   The mobile body control device according to claim 5.
(8) A mobile body control method according to another aspect of the invention is a mobile body control method, the mobile body moving while recognizing a vicinity of the mobile body, the mobile body control method including, by a mobile body control device, executing object recognition processing of recognizing an object in the vicinity of the mobile body on the basis of an observation value of a sensor provided in the mobile body, and object tracking processing of tracking the object recognized in the object recognition processing, on the basis of time-series data of the observation value, and determining whether the object is a tracking target, on the basis of a signal intensity of the observation value and a dispersion of the observation value in the object tracking processing.
(9) A program according to another aspect of the invention is a program causing a mobile body control device, a mobile body moving while recognizing a vicinity of the mobile body, to execute object recognition processing of recognizing an object in the vicinity of the mobile body on the basis of an observation value of a sensor provided in the mobile body, and object tracking processing of tracking the object recognized in the object recognition processing, on the basis of time-series data of the observation value, and determine whether the object is a tracking target, on the basis of a signal intensity of the observation value and a dispersion of the observation value in the object tracking processing.

### Advantageous Effects of Invention

According to the aspects of (1) to (9), it is possible to prevent continuation of a situation in which noise is misrecognized as a tracking target, in tracking the object in the vicinity of the mobile body.

### BRIEF DESCRIPTION OF DRAWINGS

[FIG. 1] A diagram showing an example of a configuration of a mobile body and a control device according to an embodiment.
[FIG. 2] A perspective view of the mobile body viewed from above.
[FIG. 3] A flowchart illustrating an example of a flow of processing in which the control device is tracking a dynamic object in the vicinity of the mobile body.
[FIG. 4] A diagram illustrating an outline of gating processing.
[FIG. 5] A diagram illustrating an outline of machine learning of a signal intensity by an auto-encoder.
[FIG. 6] A diagram showing an example of a situation in which an object tracking unit performs lost determination.

### DESCRIPTION OF EMBODIMENTS

Hereinafter, an embodiment of a mobile body control device, a mobile body control method, and a program of the present invention will be described with reference to the drawings. The mobile body may move on both a roadway and a predetermined area different from a roadway. The mobile body may be referred to as a micro-mobility. An electrified scooter is a type of the micro-mobility. The mobile body may be a vehicle that an occupant can board or may be an autonomous mobile body that can perform autonomous traveling in an unmanned manner. The latter autonomous mobile body is used for conveying a package or the like, for example. The predetermined area is, for example, an indoor space. Furthermore, the predetermined area may be some or all of road-side strips, bicycle lanes, public open spaces, and the like or may include all of sidewalks, road-side strips, bicycle lanes, public open spaces, and the like. The control device may control the operation of the mobile body remotely by transmitting an instruction from a position apart from the mobile body through communication.

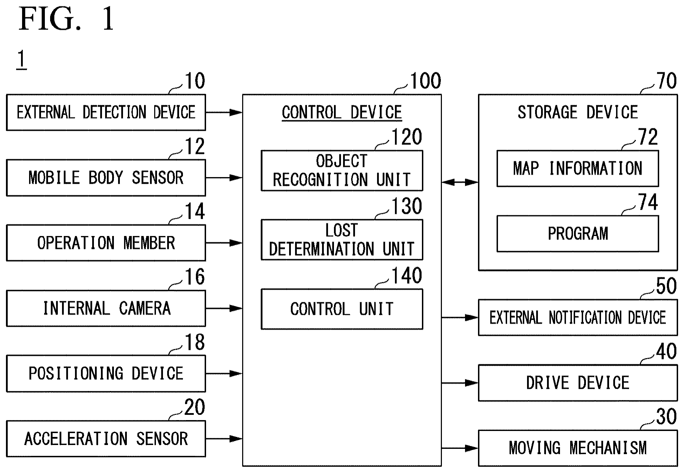

FIG. 1 is a diagram showing an example of a configuration of a mobile body 1 and a control device 100 according to an embodiment. In the mobile body 1, for example, an external detection device 10, a mobile body sensor 12, an operation member 14, an internal camera 16, a positioning device 18, an acceleration sensor 20, a moving mechanism 30, a drive device 40, an external notification device 50, a storage device 70, and the control device 100 are mounted. Some components not indispensable for implementing the features of the present invention among those components may be omitted.

The external detection device 10 is various devices that have a moving direction of the mobile body 1 as a detection range. The external detection device 10 includes an external camera, a radar device, a light detection and ranging (LIDAR), a sensor fusion device, and the like. The external detection device 10 outputs information (image, object position, and the like) indicating a detection result to the control device 100. While the external detection device 10 is not limited to a specific device as long as a position of an object in the detection range can be detected, in the present embodiment, as an example, it is assumed that the external detection device 10 is a device that outputs information regarding a wave reflected by a detection target as an observation value. For example, the external detection device 10 is a 3D sonar that detects an object by a sound wave.

The mobile body sensor 12 includes, for example, a speed sensor, a yaw rate (angular velocity) sensor, an azimuth sensor, and an operation amount detection sensor attached to the operation member 14. The operation member 14 includes, for example, an operation member (for example, an accelerator pedal or a brake pedal) for giving an instruction on acceleration/deceleration and an operation member (for example, a steering wheel) for giving an instruction on steering. In this case, the mobile body sensor 12 may include an accelerator position sensor, a brake depression amount sensor, a steering torque sensor, and the like. The mobile body 1 may include, as the operation member 14, an operation member (for example, a non-circular rotary operation member, a joystick, or a button) of an aspect other than those described above.

The internal camera 16 captures an image of at least a head of an occupant of the mobile body 1 from the front. The internal camera 16 is a digital camera using an imaging element such as a charge coupled device (CCD) or a complementary metal oxide semiconductor (CMOS). The internal camera 16 outputs a captured image to the control device 100.

The positioning device 18 is a device that measures a position of the mobile body 1. The positioning device 18 is, for example, a global navigation satellite system (GNSS) receiver, specifies the position of the mobile body 1 on the basis of signals received from GNSS satellites, and outputs the position of the mobile body 1 as position information. The position information of the mobile body 1 may be estimated from a position of a Wi-Fi (Registered Trademark; the same applies hereinafter) base station to which a communication device described below is connected.

The acceleration sensor 20 detects an acceleration of the mobile body 1 and outputs a signal according to the detected acceleration to the control device 100. The acceleration sensor 20 detects an acceleration acting in a vertical direction (height direction) in addition to a horizontal direction of the mobile body 1.

The moving mechanism 30 is a mechanism for causing the mobile body 1 to move. The moving mechanism 30 is, for example, a wheel group including steered wheels and drive wheels. The moving mechanism 30 may be legs for multi-legged walking.

The drive device 40 outputs a force to the moving mechanism 30 to cause the mobile body 1 to move. For example, the drive device 40 includes a motor that drives the drive wheels, a battery that stores electric power to be supplied to the motor, and a steering device that adjusts a steering angle of the steered wheels. The drive device 40 may include an internal combustion engine, a fuel cell, or the like as drive force output means or power generation means. The drive device 40 may further include a brake device that operates using a friction force or air resistance.

The external notification device 50 is a lamp, a display device, a speaker, or the like that is provided on, for example, an external plate portion of the mobile body 1 and notifies information to the outside of the mobile body 1. For example, the external notification device 50 may perform a different external notification operation depending on a state of the mobile body 1 during moving.

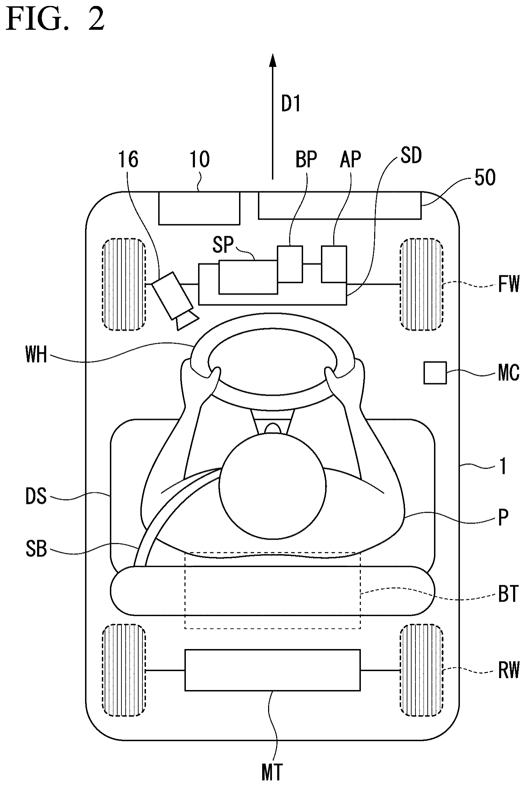

FIG. 2 is a perspective view of the mobile body 1 viewed from above. In the drawing, FW represents steered wheels, RW represents drive wheels, SD represents a steering device, MT represents a motor, and BT represents a battery. The steering device SD, the motor MT, and the battery BT are provided in the drive device 40. Furthermore, AP represents an accelerator pedal, BP represents a brake pedal, WH represents a steering wheel, SP represents a speaker, and MC represents a microphone. The mobile body 1 shown in the drawing is a one-passenger mobile body, an occupant P is sitting on a driver's seat DS with a seatbelt SB fastened. An arrow D1 represents a moving direction (speed vector) of the mobile body 1. The external detection device 10 is provided near a front end portion of the mobile body 1, and the internal camera 16 is provided at a position where an image of the head of the occupant P can be captured from the front of the occupant P. The external notification device 50 as a display device is provided near the front end portion of the mobile body 1.

Returning to FIG. 1, the storage device 70 is, for example, a non-transitory storage device such as a hard disk drive (HDD), a flash memory, or a random access memory (RAM). In the storage device 70, map information 72, a program 74 that is executed by the control device 100, and the like are stored. While the storage device 70 is illustrated outside the frame of the control device 100, the storage device 70 may be provided in the control device 100.

### [Control Device]

The control device 100 includes, for example, an object recognition unit 120, an object tracking unit 130, and a control unit 140. For example, the object recognition unit 120, the object tracking unit 130, and the control unit 140 are implemented by a hardware processor such as a central processing unit (CPU) executing the program (software) 74. Some or all of these components may be implemented by hardware (circuit unit; including circuitry) such as a large scale integration (LSI), an application specific integrated circuit (ASIC), a field-programmable gate array (FPGA), or a graphics processing unit (GPU) or may be implemented through cooperation of software and hardware. The program may be stored in the storage device 70 in advance or may be stored in a removable storage medium (non-transitory storage medium) such as a DVD or a CD-ROM and may be installed to the storage device 70 when the storage medium is loaded into a drive device.

The object recognition unit 120 recognizes an object in the vicinity of the mobile body 1 on the basis of an output of the external detection device 10. Objects includes some or all of mobile bodies such as vehicles, bicycles, and pedestrians, traveling road boundaries such as road markings, bumps, guardrails, road shoulders, and median strips, structures on a road such as road signs or signboards, and obstacles such as (falling) objects on a traveling road. The objects that are recognized by the object recognition unit 120 include static objects that do not move at their places and dynamic objects such as people or other mobile bodies. The object recognition unit 120 may recognize various states (position, speed, moving direction, and the like) of the object other than the existence of the object.

The object recognition unit 120 recognizes an object (another mobile body, an obstacle, or the like) in the vicinity (mainly an area in the moving direction) of the mobile body 1 by inputting an observation value of a sound wave acquired by the 3D sonar of the external detection device 10 to an object recognition model, for example. Here, the object recognition model is a trained model that is trained using an algorithm of machine learning, for example, and is trained to receive the observation value of the sound wave acquired by the 3D sonar as an input and output information such as existence, a position, and a type of another mobile body. The type of another mobile body may be estimated on the basis of a size in an image, an intensity of reflected wave received by the radar device of the external detection device 10, or the like or may be estimated on the basis of an image captured by the external camera of the external detection device 10. The object recognition unit 120 may recognize an object by combining these estimation results. The object recognition unit 120 may acquire, for example, a speed of another mobile body detected by the radar device using a Doppler shift or the like.

For a dynamic object among the objects recognized by the object recognition unit 120, the object tracking unit 130 performs tracking processing for the dynamic object using a Kalman filter. The object tracking unit 130 can estimate a time-varying position of the dynamic object from the observation value (a presupposition that an error is included) of the external detection device 10 using the Kalman filter. More specifically, for the dynamic object being tracked, the object tracking unit 130 estimates a current state on the basis of a prediction result of a current state from a past state, and a current observation value.

The control unit 140 controls the drive device 40, for example, according to a set driving mode. The driving mode is set to one of a plurality of modes according to an execution entity for steering and acceleration/deceleration. For example, the driving mode includes a first driving assistance mode in which the occupant performs a steering operation and acceleration/deceleration control is automatically performed, a second driving assistance mode in which the occupant performs an acceleration/deceleration operation and steering control is automatically performed, a manual driving mode in which the occupant performs the steering operation and the acceleration/deceleration operation, and an automatic driving mode in which the operation control and the acceleration/deceleration control are automatically performed. The driving mode can be changed by an operation of the occupant or the control unit 140, and the mobile body 1 may include a mechanical switch that receives a switching operation of the driving mode, a graphical user interface (GUI) switch that is set on a touch panel, or the like.

For example, the control unit 140 sets a movement path of the mobile body 1 to avoid collision with an object (static object or dynamic object) recognized by the object recognition unit 120 on the basis of a current position of the object, and controls the moving mechanism 30 and the drive device 40 of the mobile body 1 to move along the set movement path. The movement path may be appropriately determined according to the driving mode, a set destination, or the like.

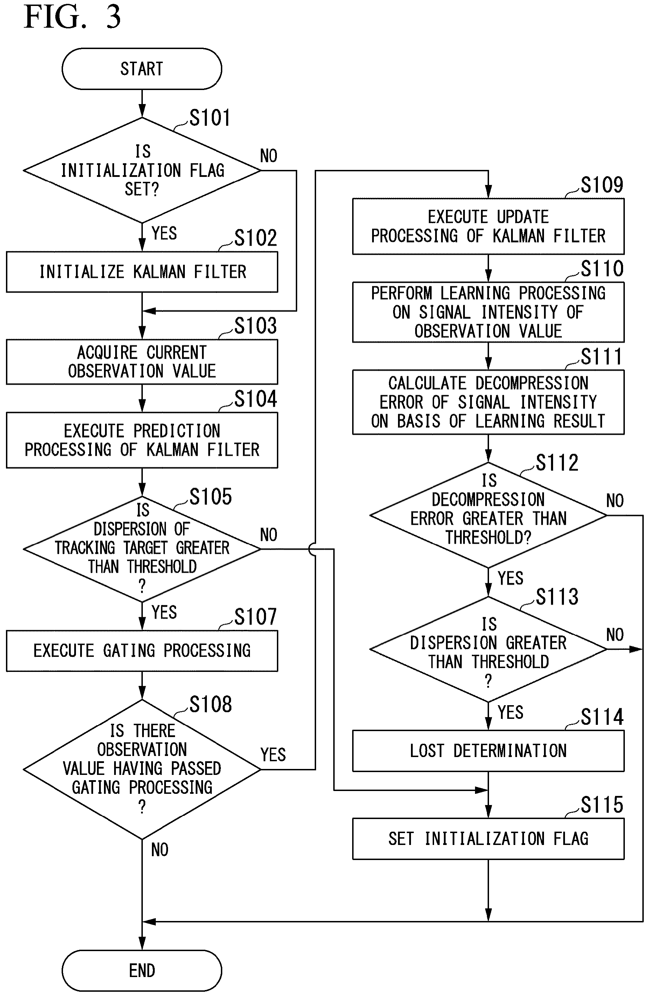

FIG. 3 is a flowchart illustrating an example of a flow of processing in which the control device 100 is tracking a dynamic object in the vicinity of the mobile body 1. Here, processing for one cycle of processing that is repeatedly executed in the tracking processing will be described. That is, in actual tracking processing, a processing flow of FIG. 3 is repeatedly executed. First, in the control device 100, the object tracking unit 130 determines whether an initialization flag of the Kalman filter is set (S101). As described above, the processing flow of FIG. 3 is repeatedly executed. For this reason, when S101 is executed for the first time, the object tracking unit 130 determines that the initialization flag has an initial value (a value indicating a state in which the flag is not set), and thereafter, determines a setting result of the initialization flag by a previous processing flow.

Here, when determination is made that the initialization flag is set, the object tracking unit 130 initializes the Kalman filter (S102), acquires a current observation value from the external detection device 10 (S103), and executes prediction processing by the Kalman filter using the acquired observation value (S104). On the other hand, when determination is made in S101 that the initialization flag is not set, the object tracking unit 130 skips the initialization processing of S102 and proceeds the processing to S103.

The initialization of the Kalman filter in S102 is returning a Kalman gain to an initial value. The initial value of the Kalman gain may be appropriately set on the basis of results of previous tests, and the like. The prediction processing of the Kalman filter in S104 is processing of predicting a future state of a tracking target from a current state estimated for the tracking target. For example, a motion model of an object of a tracking target is incorporated in the prediction processing of the Kalman filter, and the object tracking unit 130 can obtain a prediction value of a state of the tracking target in the future (in a next cycle) by inputting an estimation result of a current state to the Kalman filter.

Subsequently, the object tracking unit 130 calculates a dispersion of the observation value of the tracking target and determines whether a value of the dispersion is greater than a predetermined threshold Vth1 (S105). Here, when determination is made that the dispersion value is equal to or smaller than the threshold Vth1, the object tracking unit 130 sets the initialization flag (S106), and then ends the series of processing flow. This is because, in this case, it is considered that the observation of the tracking target is stable, and the reliability of the prediction result of the state by the Kalman filter is high. Since the initialization flag is set, and then the series of processing flow ends, the Kalman filter can be initialized when processing in the next cycle starts. The threshold Vth1 of the dispersion herein is an example of a "third threshold".

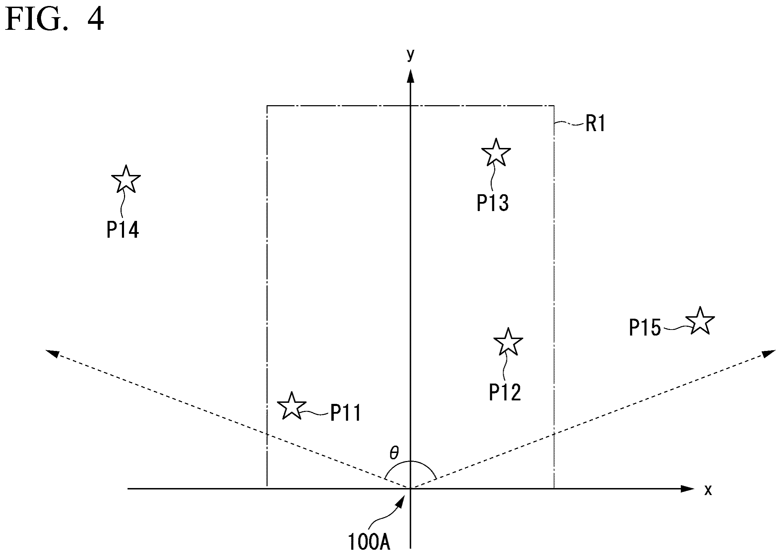

On the other hand, when determination is made in S105 that the dispersion value is greater than the threshold Vth1, the object tracking unit 130 executes the gating processing on the observation value (S107), and determines whether there is an observation value having passed the gating processing (S108). The gating processing is processing of extracting an observation value as a tracking target from an acquired observation value group. FIG. 4 is a diagram illustrating the outline of the gating processing. In an example of FIG. 4, an observation value group P11 to P15 is plotted on an x-y plane when the mobile body 1 and the vicinity thereof are virtually viewed from above. The "observation value having passed gating processing" means an observation value extracted as a tracking target in the gating processing.

In this case, the object tracking unit 130 executes the gating processing of extracting the observation values P11 to P13 included in a predetermined detection range R1 among the observation value group P11 to P15 within a range of a viewing angle from a viewpoint position of the mobile body 1 (a viewpoint position of the external detection device 10). While the example of FIG. 4 represents a case where the detection range R1 is defined by a rectangular shape with a forward direction of the mobile body 1 as a longitudinal direction, this is an example, and the detection range R1 may be freely set according to desired detection sensitivity, directivity of detection, or the like. Through such gating processing, since observation values to be detected are narrowed down, it is possible to prevent reduction in real-time performance due to a large throughput.

Description will be continued referring to FIG. 3 again. Subsequently, when determination is made in S108 that there is no observation value having passed the gating processing, the object tracking unit 130 ends the series of processing flow. This is because no observation value having passed the gating processing means no observation value that is a tracking target (processing target). On the other hand, when determination is made in S108 that there is an observation value having passed the gating processing, the object tracking unit 130 executes update processing of the Kalman filter (S109).

As described above, the Kalman filter estimates a true state of a tracking target in a current cycle on the basis of an observation value of a state of a tracking target and a Kalman gain in the current cycle and a state of the tracking target in the current cycle predicted from a state estimation result of a previous cycle. More specifically, the Kalman filter receives an observation value and an observation error for each cycle as inputs, updates the Kalman gain on the basis of the observation error and an estimation error (uncertainty of estimation, and hereinafter, referred to as a "predicted estimation error") in the current cycle predicted in filter calculation of the previous cycle, and estimates a true value of a state value in the current cycle on the basis of the Kalman gain after update and a state value (hereinafter, referred to as a "predicted state value") in the current cycle predicted in filter calculation of the previous cycle. Furthermore, the Kalman filter calculates an estimation error of the true value and outputs the estimated value and the estimation error as an estimation result of the current cycle. The update processing in S109 includes such update processing of the Kalman gain and processing of performing state estimation of the tracking target using the Kalman gain after update.

The Kalman filter calculates a state value (predicted state value) and an estimation error (predicted estimation error) in a next cycle on the basis of a result of state estimation in the current cycle, and sets a prediction result as an input of the update processing in the next cycle.

Subsequently, the object tracking unit 130 learns a signal intensity by machine learning for the observation value of the current cycle (S110). Here, while a case where an auto-encoder is supposed as an algorithm of machine learning is described, an algorithm to be used is not limited thereto. The auto-encoder is a method of unsupervised machine learning using a neural network and performs unsupervised learning intended for outputting data matching input data.

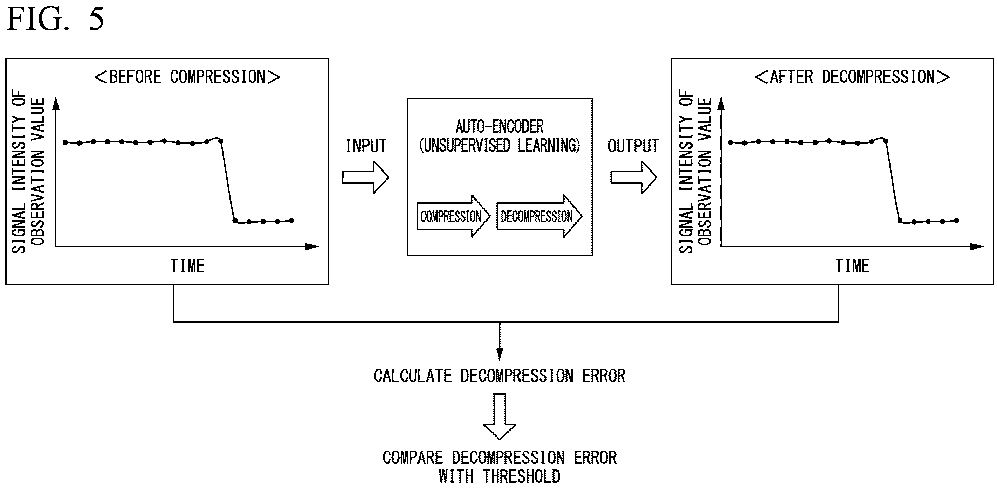

FIG. 5 is a diagram illustrating the outline of machine learning of the signal intensity by the auto-encoder. The auto-encoder is configured to compress input data to reduce the number of dimensions once, return the number of dimensions again, and output the number of dimensions. Accordingly, it is possible to form a network that extracts important information for data decompression and efficiently generates original data using an extraction result. Furthermore, since the auto-encoder performs the above-described unsupervised learning, it is possible to learn the signal intensity online by cumulatively input the signal intensity of observation data of each cycle.

Instead of the auto-encoder, a method for detect reduction in reliability of the signal intensity by directly comparing the signal intensity with a threshold may be used. In this case, while a threshold needs to be set in advance according to a rule, it is difficult to set a rule taking into account all situations for the signal intensity in advance, and work is high cost. In contrast, when the auto-encoder is used, a decompression error between input and output of the auto-encoder is compared to a threshold, when the decompression error is greater than the threshold, determination can be made to be abnormal, and when the decompression error is equal to or smaller than the threshold, determination can be made to be normal. For this reason, it is possible to detect reduction in reliability of the signal intensity more simply in a form corresponding to more situations.

Description will be continued referring to FIG. 3 again. Subsequently, by inputting the signal intensity of the observation value of the current cycle to the auto-encoder trained in S110, the object tracking unit 130 acquires a signal intensity decompressed from the signal intensity compressed inside the auto-encoder once as an output of the auto-encoder. The object tracking unit 130 calculates a decompression error of the output signal intensity to the input signal intensity (S111), and determines whether the decompression error is greater than a predetermined threshold Eth (S112). Here, when determination is made that the decompression error is equal to or smaller than the threshold Eth, the object tracking unit 130 ends the series of processing flow. This is based on the finding that, when noise is misrecognized as a tracking target, variation of the signal intensity becomes large and the decompression error is likely to become large. The threshold Eth of the decompression error herein is an example of a "first threshold".

On the other hand, when determination is made in S112 that the decompression error is greater than the threshold Eth, the object tracking unit 130 calculates a dispersion of observation values acquired in a period from the present to a predetermined point of time in the past, and determines whether the dispersion is greater than a predetermined threshold Vth2 (S113). Here, when determination is made that the dispersion is equal to or greater than the threshold Vth2, the object tracking unit 130 ends the series of processing flow. This is based on the findings that, even when variation of the signal intensity is large, when variation of the observation values is small, an object is highly likely to be not noise. The threshold Vth2 of the dispersion herein is an example of a "second threshold".

On the other hand, when determination is made in S113 that the dispersion of the observation value is greater than the threshold Vth2, the object tracking unit 130 determines that an object related to the observation value is noise (S114: lost determination). In this case, the object tracking unit 130 sets the initialization flag (S115), and then ends the series of processing flow. Here, by setting the initialization flag, the Kalman filter is initialized at the beginning of the next cycle. Thereafter, when a tracking target is generated, the prediction processing and the update processing are repeatedly executed, and the Kalman filter is updated at any time.

In the above-described processing flow, the object tracking unit 130 obtains a plurality of objects (including noise) as a tracking target. That is, the object tracking unit 130 can manage the Kalman filter and the initialization flag for each tracking target. Furthermore, the object tracking unit 130 may learn the signal intensity of the observation value for each object that is a tracking target. In addition, the object tracking unit 130 can perform the determination of the decompression error and the dispersion for each object that is a tracking target.

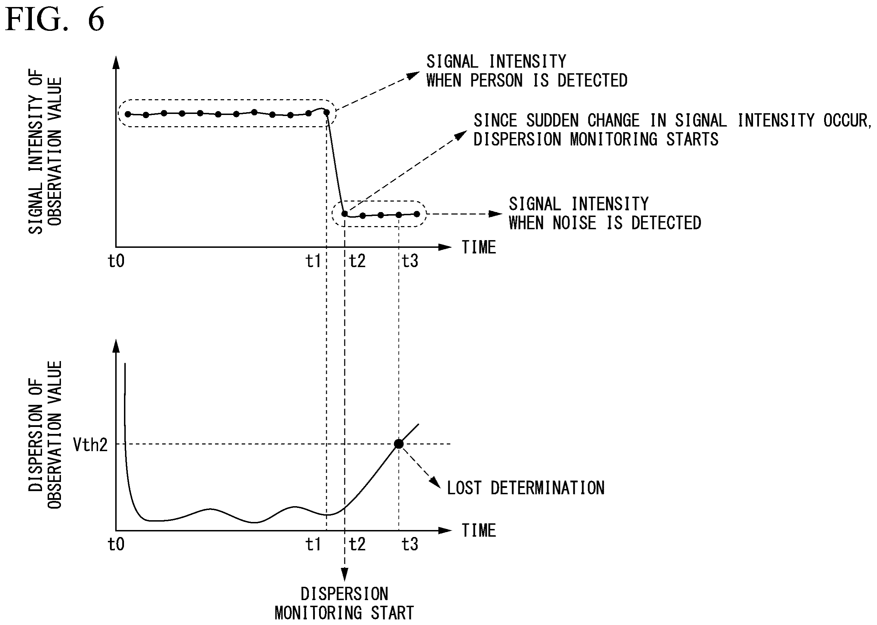

FIG. 6 is a diagram showing an example of a situation in which the object tracking unit 130 performs the lost determination. In FIG. 6, an upper graph represents a monitoring situation of a signal intensity, and a lower graph represents a monitoring situation of a dispersion of an observation value. In this example, the object tracking unit 130 sequentially learns and monitors the signal intensity for observation values input in time series, and in a period of time t0 to time t1, recognizes that the signal intensity of the observation value is a signal intensity when a person is detected. This recognition is made by determination that the decompression error of the signal intensity is equal to or smaller than the threshold Eth as described above. That is, this recognition corresponds to a case where the reliability of the observation value is higher than a predetermined reference.

Subsequently, the object tracking unit 130 detects that the signal intensity of the observation value is a signal intensity when noise is detected at time t2. This recognition is made by determination that the decompression error of the signal intensity is greater than the threshold Eth as described above. That is, this recognition corresponds to a case where the reliability of the observation value is equal to or smaller than the predetermined reference. The object tracking unit 130 determines that the reliability of the observation value is likely to be reduced, from change in signal intensity, and starts to monitor the dispersion of the observation value from time t2.

The example of FIG. 6 represents a situation in which a tracking target becomes noise near time t2 at which the signal intensity is significantly decreased, and the dispersion of the observation value gradually becomes large. In this example, the object tracking unit 130 detects that the dispersion becomes greater than the threshold Vth2 for the lost determination at time t3 after starting dispersion monitoring at time t2, and executes the lost determination.

According to the present embodiment described above, by monitoring the change in signal intensity of the observation value, it is possible to detect an increase in likelihood that noise becomes a tracking target with high accuracy, and then, to perform the lost determination according to the dispersion of the observation value. For this reason, it is possible to promptly detect a situation in which noise is misrecognized as a tracking target, and to prevent the continuation of the situation.

According to the present embodiment, since dispersion monitoring starts after an increase in likelihood that noise becomes a tracking target is detected, when a processing load of dispersion monitoring is high, it is possible to reduce hardware resources necessary for dispersion monitoring, and to reduce the processing load of the control device 100.

The above-described embodiment can be expressed as follows.

A control device for a mobile body, which moves while recognizing a vicinity of the mobile body, the control device including
a storage medium that stores computer-readable instructions, and
a processor connected to the storage medium,
in which the processor executes the computer-readable instructions to
execute object recognition processing of recognizing an object in the vicinity of the mobile body on the basis of an observation value of a sensor provided in the mobile body, and
object tracking processing of tracking the object recognized in the object recognition processing, on the basis of time-series data of the observation value, and
determine whether the object is a tracking target, on the basis of a signal intensity of the observation value and a dispersion of the observation value in the object tracking processing.

Although the mode for carrying out the present invention has been described using the embodiment, the present invention is not limited to the embodiment, and various modifications and substitutions can be made without departing from the spirit or scope of the present invention.

### REFERENCE SIGNS LIST

1 Mobile body, 10 External detection device, 12 Mobile body sensor, 14 Operation member, 16 Internal camera, 18 Positioning device, 20 Acceleration sensor, 30 Moving mechanism, 40 Drive device, 50 External notification device, 70 Storage device, 72 Map information, 74 Program, 100 Control device, 120 Object recognition unit, 130 Object tracking unit, 140 Control unit

## Claims

1. A mobile body control device, the mobile body moving while recognizing a vicinity of the mobile body, the mobile body control device comprising:
an object recognition unit configured to recognize an object in the vicinity of the mobile body on the basis of an observation value of a sensor provided in the mobile body; and
an object tracking unit configured to track the object recognized by the object recognition unit, on the basis of time-series data of the observation value,
wherein the object tracking unit is configured to determine whether the object is a tracking target, on the basis of a signal intensity of the observation value and a dispersion of the observation value.

2. The mobile body control device according to claim 1,
wherein the object tracking unit is configured to determine that the objects is not a tracking target, when a reliability of the observation value based on the signal intensity is equal to or smaller than a predetermined reference, and when the dispersion of the observation value is greater than a threshold.

3. The mobile body control device according to claim 2,
wherein the object tracking unit is configured to start monitoring of the dispersion of the observation value when a state in which the reliability is higher than the reference changes to a state in which the reliability is equal to or lower than the reference, and determine that the object is no longer the tracking target, when the dispersion of the observation value is greater than the threshold.

4. The mobile body control device according to claim 2,
wherein the object tracking unit is configured to determine that the object is not a tracking target, when the reliability is recognized on the basis of an error between the signal intensity of the observation value and an estimation result of the signal intensity of the observation value, when the error is greater than a first threshold, and when the dispersion is greater than a second threshold.

5. The mobile body control device according to claim 4,
wherein the object tracking unit is configured to learn the signal intensity of the observation value with an auto-encoder configured to compress and decompress the signal intensity of the observation value and compare a decompression error between a signal intensity before compression by the auto-encoder and a signal intensity after decompression with the first threshold.

6. The mobile body control device according to claim 1,
wherein the object tracking unit is configured to perform tracking for the object by applying the observation value to a Kalman filter and execute initialization on the Kalman filter when determination is made that the object is not the tracking target.

7. The mobile body control device according to claim 6,
wherein the object tracking unit is configured to execute gating processing when the dispersion of the observation value is greater than a third threshold and execute update processing of the Kalman filter when there is an observation value having passed the gating processing.

8. A mobile body control method, a mobile body moving while recognizing a vicinity of the mobile body, the mobile body control method comprising:
by a mobile body control device,
executing object recognition processing of recognizing an object in the vicinity of the mobile body on the basis of an observation value of a sensor provided in the mobile body, and
object tracking processing of tracking the object recognized in the object recognition processing, on the basis of time-series data of the observation value; and
determining whether the object is a tracking target, on the basis of a signal intensity of the observation value and a dispersion of the observation value in the object tracking processing.

9. A program causing a mobile body control device, a mobile body moving while recognizing a vicinity of the mobile body, to:
execute object recognition processing of recognizing an object in the vicinity of the mobile body on the basis of an observation value of a sensor provided in the mobile body, and
object tracking processing of tracking the object recognized in the object recognition processing, on the basis of time-series data of the observation value; and
determine whether the object is a tracking target, on the basis of a signal intensity of the observation value and a dispersion of the observation value in the object tracking processing.
